# EUROPEAN PATENT APPLICATION

(11) **EP 4 624 784 A1**
(43) Date of publication of application: **01.10.2025**
(21) Application number: 25159837.1
(22) Date of filing: 25.02.2025
(51) Int. Cl.: F16H 57/04

(54) **PLANETARY GEAR UNIT AND PLANETARY GEAR DEVICE**

(30) Priority: 26.03.2024 JP 2024049600
(71) Applicant: Daido Metal Co., Ltd., Nagoya-shi, Aichi 460-0008 (JP)
(72) Inventor: KAWASHIMA, Yuki, Inuyama-shi (JP); YAMADA, Motohira, Inuyama-shi (JP)
(74) Representative: Schulz Junghans Patentanwälte PartGmbB

(57) **Abstract**

A shaft member 22 includes a sliding region 30, an opening 41, a connecting passage portion 42, and a groove portion 43. The sliding region 30 is formed with a main load portion 32 and a sub load portion 31 in a circumferential direction on an outer circumferential surface 27, the main load portion 32 receiving a large load from a planetary gear member 21 when the sliding region 30 slides, the sub load portion 31 receiving a smaller load than the main load portion 32 when the sliding region 30 slides. The opening 41 is open on the sub load portion 31. A groove portion 43 is provided so as to be recessed radially inward from the outer circumferential surface 27, extends from the opening 41 toward at least one end in an axial direction of the sliding region 30, and has a groove end 48 on an opposite side of the opening 41. The groove end 48 is located axially outward relative to an opposing inner circumferential surface 24.

## Description

### BACKGROUND OF THE INVENTION

### Field of the Invention

This embodiment relates to a planetary gear unit and a planetary gear device.

### Description of the Related Art

A planetary gear device is provided between the input side and the output side of a power source, and transmits the driving force of the input side to the output side with slowing down or speeding up. The planetary gear device is provided with a planetary gear unit between the so-called sun gear and the internal gear, the planetary gear unit revolving in the circumferential direction while meshing with them. The planetary gear unit has a planetary gear member with external teeth and a shaft member that rotates relatively to the planetary gear member inside the planetary gear member.

In recent years, while the sizes of the devices that generate the driving force have increased, there has been a demand for further weight reduction in planetary gear devices. For this reason, in planetary gear devices, use of sliding bearings instead of conventional rolling bearings is being considered for support in between the planetary gear members and the shaft members. Although the use of sliding bearings allows the planetary gear device to be made smaller, there is a problem in which the torque density increases and the loads on the sliding portions increases.

Such a planetary gear device has a unique configuration that limits the region to which a large load is applied between the planetary gear member and the shaft member in the planetary gear unit, the shaft member supporting the planetary gear member when the planetary gear device is in operation. In other words, the inner circumferential surface of the planetary gear member and the outer circumferential surface of the shaft member slide against each other, and have a region where the applied load is relatively large and a region where the applied load is relatively small, each constantly formed in a specific range, regardless of position change accompanying rotation.

Therefore, lubrication between the planetary gear member and the shaft member is an important element of the planetary gear unit. In International Publication No. WO 2021/058262, sliding portion between the planetary gear member and the shaft member have unevenness. As a result, in International Publication No. WO 2021/058262, the retention of lubricating oil is promoted in the recessed portion, and even when a sliding bearing is used, the formation of an oil film is promoted in a region where a large load is locally applied depending on the operating conditions.

However, in the case of International Publication No. WO 2021/058262, foreign matter that has entered between a planetary gear member and the shaft member is likely to remain in the recessed portion, which will be a cause of preventing an oil film from being formed in the sliding portion. In particular, when a sliding bearing is used, it is necessary to prevent foreign matter from entering between the inner circumferential surface of the planetary gear member and the outer circumferential surface of the shaft member, which form the sliding portion, in order to maintain an oil film of lubricating oil. If foreign matter enters, scratches are caused in the sliding portion, and these scratches hinder the formation of an oil film in the sliding portion. As a result, there is a problem in which seizure or abnormal wear occurs in the sliding portion between the planetary gear member and the shaft member. In addition, in the case of International Publication No. WO 2021/058262, the grooves that supply lubricating oil to the sliding portion are provided on the entire circumference in the circumferential direction, including the region where the load is large. Therefore, in International Publication No. WO 2021/058262, there may be a problem in which the overall sliding area is reduced, the pressure on the oil film increases, the lubricating oil is insufficiently supplied at the axial end, and the foreign matter enters the region to which a large load is applied, thereby preventing the oil film from being formed.

An object of this embodiment is to provide a planetary gear unit and a planetary gear device that promotes discharge of foreign matter and forms a stable oil film in a sliding portion, and thereby seizure and abnormal wear is reduced and a lifespan is increased.

### SUMMARY OF THE INVENTION

In order to solve the above problems, a planetary gear unit of this embodiment includes: a planetary gear member; a sliding member that is formed of a bearing alloy, has a cylindrical inner circumferential surface, and is provided on an inner circumferential side of the planetary gear member; and a shaft member having an outer circumferential surface, the outer circumferential surface having a total axial length longer than the inner circumferential surface, the outer circumferential surface having a part in an axial direction, the part being opposed to the inner circumferential surface.

The shaft member includes a sliding region, an opening, a connecting passage portion, and a groove portion.

The sliding region is formed with a main load portion and a sub load portion in a circumferential direction on the outer circumferential surface, the main load portion receiving a large load from the planetary gear member when the sliding region slides against the planetary gear member on which the sliding member is provided, the sub load portion receiving a smaller load than the main load portion when the sliding region slides against the planetary gear member. The opening is open on the sub load portion. The connecting passage portion connects at least one axial end and the opening, inside the shaft member. A groove portion is provided so as to be recessed radially inward from the outer circumferential surface, extends from the opening toward at least one end in an axial direction of the shaft member, and has a groove end on an opposite side of the opening. The groove end is located axially outward relative to the opposing inner circumferential surface.

As a result, in this embodiment, the lubricating oil is supplied to the opening through the connecting passage portion, and is supplied from the opening through the groove portion to the sliding portion between the inner circumferential surface and the outer circumferential surface. The lubricating oil flowing out from the opening is discharged from the groove end through the groove portion. As a result, even if foreign matter enters the sliding portion between the inner circumferential surface and the outer circumferential surface, the foreign matter is promoted to be discharged from the groove end together with the lubricating oil through the groove portion. In addition, in this embodiment, when the opening forms a planetary gear unit together with the planetary gear member, the opening is located in a sub load portion where the load applied in sliding is relatively small. As a result, an oil film is stably formed in the part that needs the oil film between the inner circumferential surface and the outer circumferential surface that form the sliding portion.

As a result, it is possible to promote discharge of foreign matter, form a stable oil film in the sliding portion, and reduce seizure and abnormal wear, thereby extending the lifespan.

### BRIEF DESCRIPTION OF THE DRAWINGS

FIG. 1 is a schematic perspective view showing an example of a configuration of a planetary gear device;
FIG. 2 is a schematic diagram showing a cross section along an axis of a planetary gear unit according to an embodiment;
FIG. 3 is a schematic diagram as viewed from a direction of an arrow III in FIG. 2;
FIG. 4 is a schematic diagram of a shaft member according to a first embodiment as viewed from a direction of an arrow IV in FIG. 2;
FIG. 5 is a schematic diagram obtained by developing an outer circumferential surface of a shaft member according to the first embodiment in a circumferential direction;
FIG. 6 is schematic perspective views of second regions each set on the outer circumferential surface of the shaft member according to the first embodiment;
FIG. 7 is a schematic diagram showing the shaft member according to the first embodiment;
FIG. 8 is a schematic diagram showing a modification of the shaft member according to the first embodiment;
FIG. 9 is a schematic diagram showing a modification of the shaft member according to the first embodiment;
FIG. 10 is a schematic diagram showing a modification of the shaft member according to the first embodiment;
FIG. 11 is a schematic diagram showing a shaft member according to a second embodiment;
FIG. 12 is a schematic diagram showing a modification of the shaft member according to the second embodiment;
FIG. 13 is a schematic diagram showing a modification of the shaft member according to the second embodiment;
FIG. 14 is a schematic diagram showing a shaft member according to a third embodiment;
FIG. 15 is a schematic diagram showing a modification of the shaft member according to the third embodiment;
FIG. 16 is a schematic diagram showing a modification of the shaft member according to the third embodiment;
FIG. 17 shows schematic diagrams each showing an enlarged view of a vicinity of a throttle portion in the shaft member according to the third embodiment to show a shape of the throttle portion;
FIG. 18 shows schematic diagrams each showing a relationship between a groove portion and the throttle portion in the shaft member according to the third embodiment;
FIG. 19 is a schematic diagram showing a shaft member according to a fourth embodiment;
FIG. 20 is a schematic diagram showing a modification of the shaft member according to the fourth embodiment;
FIG. 21 is a schematic diagram showing a modification of the shaft member according to the fourth embodiment;
FIG. 22 is a schematic diagram showing a modification of the shaft member according to the fourth embodiment;
FIG. 23 is a schematic diagram showing a modification of the shaft member according to the fourth embodiment;
FIG. 24 is a schematic diagram showing a modification of the shaft member according to the fourth embodiment;
FIG. 25 is a schematic diagram showing a modification of the shaft member according to the fourth embodiment; and
FIG. 26 is a schematic diagram showing an example of a shaft member according to another embodiment.

### DETAILED DESCRIPTION OF THE INVENTION

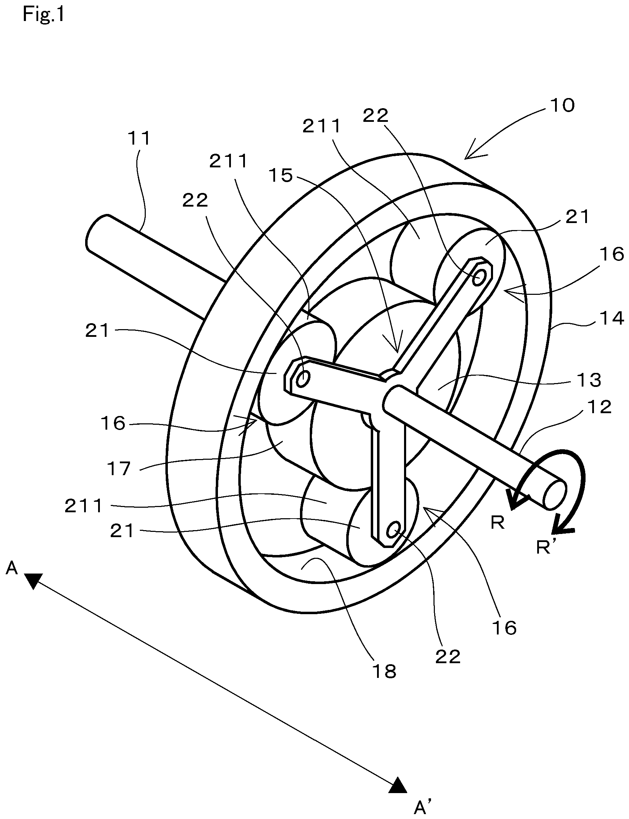

The following describes embodiments based on the drawings. Here, in a plurality of embodiments, substantially the same components are given the same reference numerals and characters and the description is omitted. In this specification, an axial direction is the direction parallel to the rotation axis as shown in A-A' of FIG. 1, a radial direction is the direction perpendicular to the axial direction, and a circumferential direction is the circumferential direction centered on the axis as shown in R-R' of FIG. 1.

### (Planetary gear device)

FIG. 1 shows an example of a general planetary gear device 10. The planetary gear device 10 includes a first shaft member 11, a second shaft member 12, a sun gear 13, an internal gear 14, a carrier 15, and a planetary gear unit 16. Note that the teeth of the gear members in FIG. 1 and other figures are not shown for simplicity. The sun gear 13 is attached to the first shaft member 11 and rotates integrally with the first shaft member 11. The sun gear 13 is a so-called external tooth gear and has an external tooth portion 17 on its outer circumferential side. The internal gear 14 is a so-called internal gear and is formed in an annular shape with an internal tooth portion 18 on its inner circumferential side. The carrier 15 is attached to the second shaft member 12, and rotates integrally with the second shaft member 12.

Each planetary gear unit 16 includes a planetary gear member 21 and a shaft member 22. The planetary gear member 21 is an external tooth gear and is supported by a shaft member 22 so as to be rotatable relatively to the shaft member 22. The planetary gear unit 16 is provided between the sun gear 13 and the internal gear 14, and meshes with both the sun gear 13 and the internal gear 14. One or more planetary gear units 16 are provided in the circumferential direction of the sun gear 13. The shaft member 22 of the planetary gear unit 16 is supported by the carrier 15.

As a result, when the carrier 15 rotates together with the second shaft member 12 as the input side shaft, this rotation is transmitted to the planetary gear units 16. For example, if the internal gear 14 is fixed so that it cannot rotate, the planetary gear units 16 revolve around the sun gear 13. At this time, the planetary gear member 21 of each planetary gear unit 16 rotates relatively to the shaft member 22 supported by the carrier 15. In other words, the planetary gear member 21 rotates on its own axis in the opposite direction to the revolution of the carrier 15 due to the revolution of the carrier 15. For example, if the revolution direction of the carrier 15 is clockwise, the rotation direction of the planetary gear member 21 is counterclockwise. As a result, the shaft member 22 fixed to the carrier 15 rotates together with the carrier 15, and thereby the planetary gear member 21 rotates relatively to the shaft member 22. This causes the inner circumferential side of the planetary gear member 21 to slide against the outer circumferential side of the shaft member 22. When the planetary gear unit 16 revolves, the rotation is transmitted to the first shaft member 11, as the output side shaft, via the sun gear 13. As a result, the rotation input from the second shaft member 12 is speeded up by the planetary gear device 10, and transmitted to the first shaft member 11. Here, in the above example, an example has been described in which the second shaft member 12 is on the input side and the first shaft member 11 is on the output side, and the internal gear 14 is fixed, so that speeding up is performed. However, the planetary gear device 10 can freely combine three elements, the first shaft member 11, the second shaft member 12, and the internal gear 14, in which any one of the three elements is made into the input side, any one of the other elements is made into the output side, and the remaining element is made fixed.

### (First embodiment)

The planetary gear units 16 to be used in the planetary gear device 10 will be described.

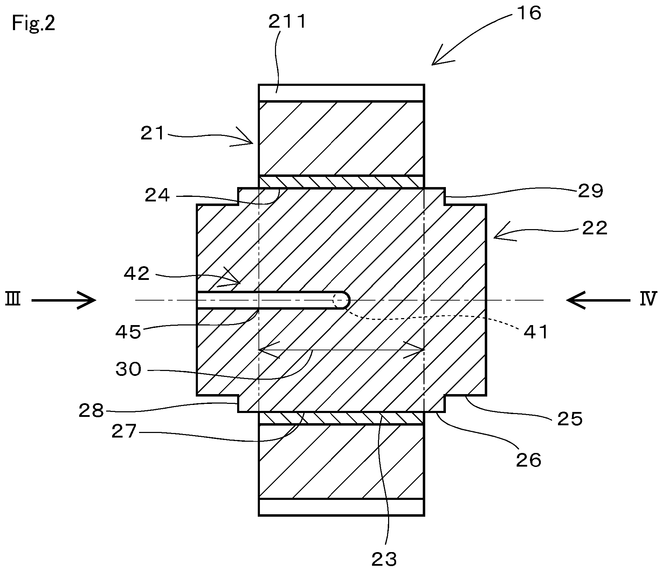

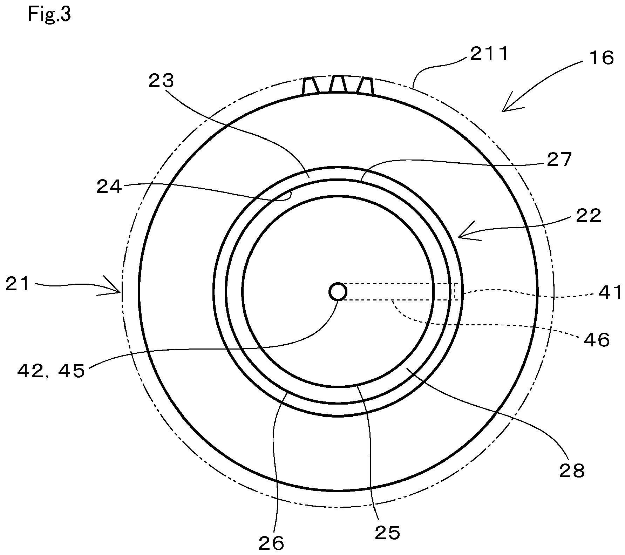

Each planetary gear unit 16 of the first embodiment includes the planetary gear member 21 and the shaft member 22 as described above. The planetary gear unit 16 of the first embodiment also includes a sliding member 23 on the inner circumferential side of the planetary gear member 21. As shown in FIGS. 2 and 3, the planetary gear member 21 is an external tooth gear having teeth 211 on its outer circumferential side, and is formed in a cylindrical shape. The sliding member 23 is formed of, for example, a sliding alloy or resin, and is provided integrally with the planetary gear member 21 on the inner circumferential side of the planetary gear member 21. In the first embodiment, an example will be described in which the sliding member 23 is formed of a sliding alloy. The sliding alloy to be used for the sliding member 23 is any of alloys such as a Cu-based, Al-based, or Sn-based alloy. The sliding member 23 is formed in an annular shape, and is provided on the inner circumferential side of the planetary gear member 21 by a method such as press-fitting, build-up welding, or plating. When a resin is used for the sliding member 23, the examples of the resin include various resins such as fluorine-containing resin, POM (polyacetal), PEEK (polyether ether ketone), and polyamide resin. In this case, the sliding member 23 is formed on the inner circumferential side of the planetary gear member 21 by a method, such as spray painting, printing, welding, or impregnation. Impregnation is, for example, impregnating a porous sintered material with resin. The annular sliding member 23 has an inner circumferential surface 24 on the radially inner side. The sliding member 23 may have another layer, such as a resin overlay layer, on the surface of the sliding alloy, that is, the inner circumferential surface 24.

The shaft member 22 is provided on the inner circumferential side of the cylindrical sliding member 23. The shaft member 22 is formed in a shape of a solid or hollow shaft. The shaft member 22 is formed of an Fe-based material, such as Fe or an Fe alloy. In the case of the first embodiment, the shaft member 22 has a main body portion 25 and a large diameter portion 26 as shown in FIG. **2****.** The shaft member 22 has an outer circumferential surface 27 on the outer circumferential side of the large diameter portion 26. The planetary gear member 21 and the shaft member 22 rotate relatively. Therefore, the outermost outer circumferential surface 27 of the shaft member 22 slides against the inner circumferential surface 24 of the sliding member 23. The large diameter portion 26 has an outer diameter larger than the main body portion 25. As a result, the shaft member 22 has annular outer walls 28 and 29 at the respective ends of the large diameter portion 26 in the axial direction.

In the first embodiment in which the sliding member 23 is provided on the inner circumferential side of the planetary gear member 21, the total axial length of the large diameter portion 26 of the shaft member 22 is larger than the total axial length of the sliding member 23. In other words, the outer circumferential surface 27 of the shaft member 22 has a total axial length larger than the inner circumferential surface 24 of the sliding member 23. Therefore, as shown in FIG. 2, the outer circumferential surface 27 formed by the large diameter portion 26 protrudes outward in the axial direction from the inner circumferential surface 24 formed by the sliding member 23. As a result, the outer walls 28 and 29 of the shaft member 22 are positioned outward of the respective axial ends of the sliding member 23.

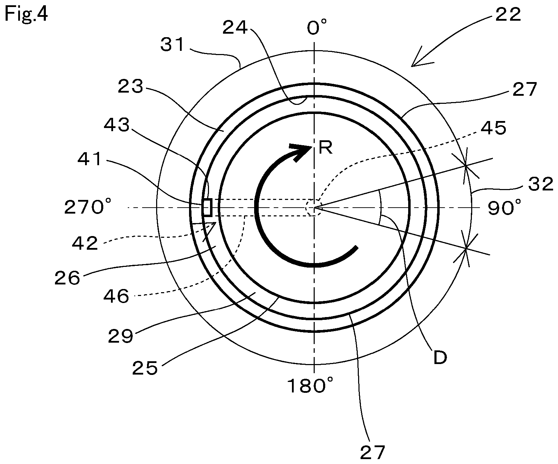

The outer circumferential surface 27 of the shaft member 22 protrudes outward in the axial direction further than the inner circumferential surface 24 formed by the sliding member 23. Therefore, the outer circumferential surface 27 of the shaft member 22 is opposed to the inner circumferential surface 24 of the sliding member 23 in part of the axial direction. The outer circumferential surface 27 of the shaft member 22 has a part opposing the inner circumferential surface 24, the part forming a sliding region 30 that slides against the inner circumferential surface 24. This sliding region 30 is divided into a sub load portion 31 and a main load portion 32 in the circumferential direction as shown in FIG. 4. The sub load portion 31 and the main load portion 32 are provided adjacently to each other in preset ranges in the circumferential direction of the outer circumferential surface 27. Since the planetary gear units 16 are assembled to the planetary gear device 10, the planetary gear units 16 revolves around the sun gear 13 while rotating in the opposite direction to the revolution direction as described above. Such a planetary gear device 10 has a unique structure that causes a certain range of each shaft member 22 to constantly receive a large load from the planetary gear member 21 when the shaft member 22 slides against the sliding member 23 integral with the planetary gear member 21 as the planetary gear device 10 operates. In other words, when the sliding region 30 of the shaft member 22 slides against the sliding member 23 integral with the planetary gear member 21, the sliding region 30 is divided into a main load portion 32 that receives a large load from the planetary gear member 21, and a sub load portion 31 that receives a smaller load than the main load portion 32. Specifically, the shaft member 22 of the planetary gear unit 16 constantly receive a large load at the main load portion 32 during operation of the planetary gear device 10, and the range of the main load portion 32 hardly changes even if the shaft member 22 rotates.

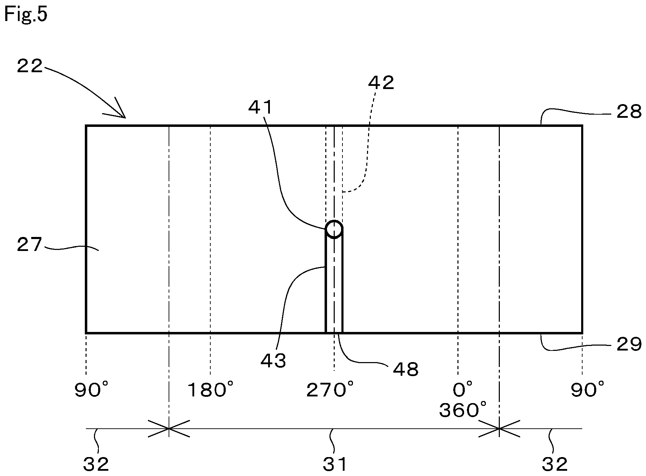

More specifically, FIG. 5 is a development obtained by developing the outer circumferential surface 27 in the circumferential direction. In FIG. 4, the relative rotation direction between the planetary gear member 21 and the shaft member 22 is R, and the upper end side is 0° and the lower end side is 180° in the circumferential coordinate system. In other words, FIG. 5 is a development obtained by developing the outer circumferential surface 27 at the 90° position in the circumferential direction. As shown in this FIG. 5, the sub load portion 31 is set mainly in the range of 180° to 360° in the coordinate system, and the main load portion 32 is set mainly in the range of 0° to 180° in the coordinate system. More specifically, the main load portion 32 is provided in a range whose central angle D is 0° < D < 150° in the region of 0° to 180° in this coordinate system, depending on the characteristics of the planetary gear device 10. In this case, it is preferable that the main load portion 32 have a central angle D of at least 30° or more. Here, the main load portion 32 is not necessarily near 90° in the coordinate system as in the example shown in FIG. 4. In other words, when the planetary gear member 21 and the shaft member 22 slide against each other, the main load portion 32, which is subjected to a large load, occurs somewhere in the range of 0° to 180° in the coordinate system, depending on the characteristics of the planetary gear device 10. For this reason, the main load portion 32 is set in the range whose central angle D is 0° < D < 150° in the region of 0° to 180° in the coordinate system, depending on the characteristics of the planetary gear device 10. The region other than the main load portion 32 in the outer circumferential surface 27 is a sub load portion 31.

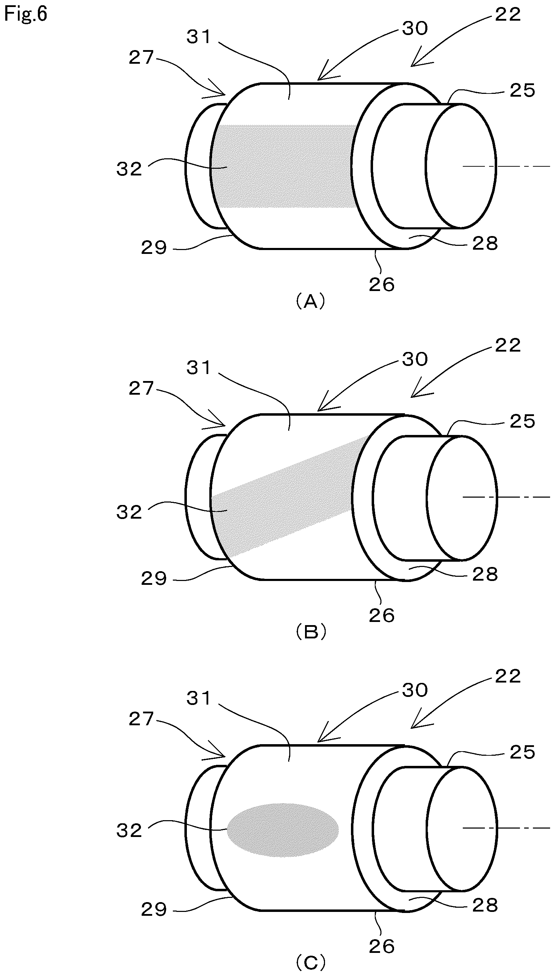

Furthermore, the main load portion 32 is not limited to the example in which the main load portion 32 is set parallel to the central axis of the shaft member 22 as shown in FIGS. 4, 5, and 6(A). In other words, if the main load portion 32 is defined in the circumferential direction of the shaft member 22, the main load portion 32 may be set to be inclined with respect to the central axis, on the outer circumferential surface 27 of the shaft member 22 as shown in FIG. 6(B). Also, the main load portion 32 is not limited to the example in which the main load portion 32 is set over the entire axial length of the shaft member 22, but may be set midway in the axial direction as shown in FIG. 6(C). Furthermore, the main load portion 32 is not limited to one as shown in FIG. 6, but may be set in two or more parts in the axial or circumferential direction. In this way, the main load portion 32 is set according to the characteristics of the planetary gear device 10.

In addition to the above, each shaft member 22 has an opening 41, a connecting passage portion 42, and a groove portion 43 as shown in FIGS. 2 to 5 and 7. The opening 41 is open on the sub load portion 31 on the outer circumferential side of the shaft member 22. In other words, the opening 41 is open on the sub load portion 31 on the outer circumferential surface 27, which is the outermost circumferential side of the shaft member 22. The connecting passage portion 42 is provided inside the shaft member 22, and connects at least one end of the shaft member 22 to the opening 41. The connecting passage portion 42 may be configured to connect not only one end of the shaft member 22 to the opening 41 as shown in FIG. 2, but also both ends of the shaft member 22 to the opening 41. Lubricating oil supplied from a pump (not shown) flows through the connecting passage portion 42. With the configured planetary gear unit 16, the lubricating oil is supplied to the sliding region 30 between the planetary gear member 21 and the shaft member 22. The lubricating oil is supplied to the opening 41 through the connecting passage portion 42. In the case of the first embodiment, the connecting passage portion 42 has a passage portion 45 extending in the axial direction and a passage portion 46 extending in the radial direction as shown in FIGS. 2 and 3. The connecting passage portion 42 is not limited to the example shown in FIGS. 2 and 3, and may be inclined in the axial or radial direction. The connecting passage portion 42 is not limited to the example in which at least one end of the shaft member 22 is connected to the opening 41 by two passage portions 45 and 46. In other words, the connecting passage portion 42 may connect the end of the shaft member 22 and the opening 41 without bending, or may have two or more bent portions.

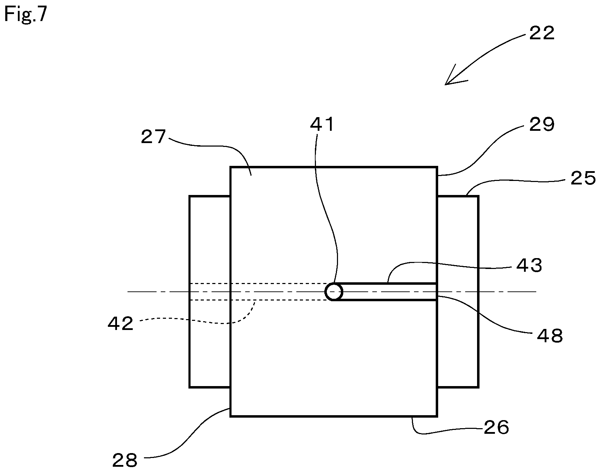

The groove portion 43 is recessed radially inward from the outer circumferential surface 27 of the large diameter portion 26 of the shaft member 22. In other words, the groove portion 43 is provided in a recessed shape in the large diameter portion 26. The groove portion 43 extends from the opening 41 to at least one end side in the axial direction of the sliding member 23 as shown in FIG. 7. In this way, the groove portion 43 has one end connected to the opening 41 and the end, opposite to the opening 41, having a groove end 48. The groove end 48 is located axially outward relative to the inner circumferential surface 24 of the opposing sliding member 23. As a result, the groove end 48 has an end opposite the opening 41, the end facing the outside of the sliding member 23 in the axial direction.

The opening 41 and the groove portion 43 provided in the shaft member 22 are provided in the sub load portion 31 of the shaft member 22 as shown in FIGS. 4 and 5. Specifically, in the case of the first embodiment, the opening 41 and the groove portion 43 are provided in the vicinity of 270° in the coordinate system shown in FIG. 4. In other words, the opening 41 and the groove portion 43 are provided in the sub load portion 31, which is generally opposite the main load portion 32 in the radial direction of the shaft member 22.

The connecting passage portion 42 is connected to the discharge passage portion of an external pump (not shown). The pump (not shown) that pressurizes the lubricating oil supplies the lubricating oil through the connecting passage portion 42. The lubricating oil discharged from the pump (not shown) is supplied to the connecting passage portion 42 through the discharge passage portion (not shown). With this configuration, the lubricating oil supplied to the opening 41 through the connecting passage portion 42 flows out from the opening 41 along the outer circumferential surface 27 of the large diameter portion 26. At the same time, some of the lubricating oil that flows out from the opening 41 flows in the axial direction through the groove portion 43 and is discharged from the groove end 48 to the outside of the planetary gear unit 16. In other words, foreign matter that has entered the sliding region 30 between the inner circumferential surface 24 and the outer circumferential surface 27 is discharged from the groove end 48 through the groove portion 43 together with the lubricating oil flowing out from the opening 41.

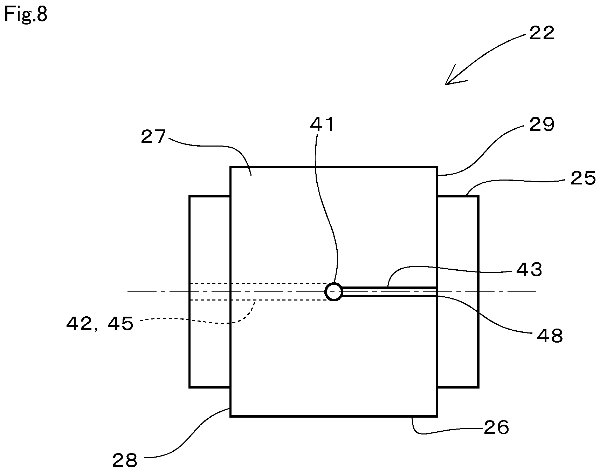

The cross-sectional area of the groove portion 43 may be approximately the same as that of the connecting passage portion 42, or may be different from that of the connecting passage portion 42. In this case, it is preferable that the cross-sectional area of the groove portion 43 be smaller than that of the connecting passage portion 42, as shown in FIG. 8. If the cross-sectional area of the groove portion 43 is smaller than that of the connecting passage portion 42, the flow rate of the lubricating oil supplied from the connecting passage portion 42 to the groove portion 43 is reduced. Reducing the flow rate of the lubricating oil can reduce the capacity of the pump (not shown), making it possible to make the pump smaller.

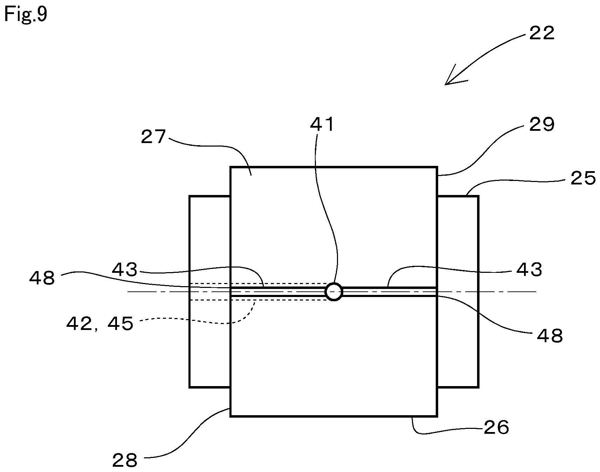

The groove portion 43 may extend from the opening 41 not only to one end side in the axial direction of the shaft member 22, but also to the other end, as shown in FIG. 9. Providing the groove portion 43 to each end side in the axial direction causes the lubricating oil having flowed out from the opening 41 to flow in both axial directions along the outer circumferential surface 27 of the shaft member 22. Therefore, the lubricating oil can be more uniformly supplied to the sliding region 30 between the outer circumferential surface 27 of the shaft member 22 and the inner circumferential surface 24 of the planetary gear member 21.

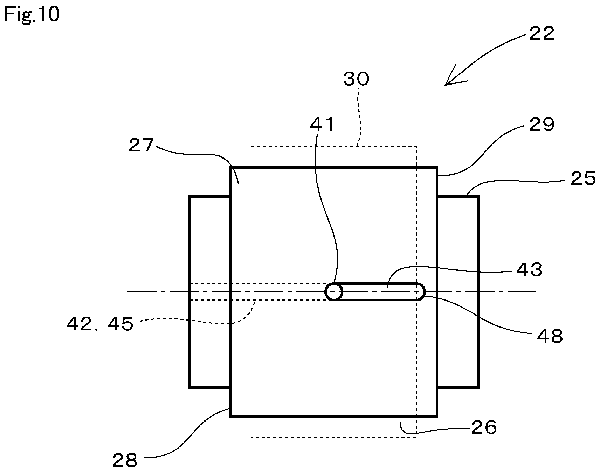

The groove end 48, which is the end of the groove portion 43 opposite the opening 41, is not limited to the example in which it reaches the outer wall 29 as shown in FIGS. 7 to 9. In other words, the groove end 48 does not need to reach the outer wall 29 as shown in FIG. 10. As shown in FIG. 2, the outer circumferential surface 27 provided on the large diameter portion 26 of the shaft member 22 extends further outward than the axial end of the sliding member 23. Therefore, even if the groove end 48 does not reach the outer wall 29 as shown in FIG. 10, the groove end 48 is located outside the sliding region 30. As a result, even if the groove end 48 does not reach the outer wall 29, the lubricating oil having flowed into the groove end 48 can flow out of the groove portion 43 to the outside of the planetary gear unit 16.

The following describes a method for manufacturing each shaft member 22 of the first embodiment configured as described above.

In the shaft member 22, the main body portion 25 and the large diameter portion 26 are formed of, for example, an Fe-based material. After the main body portion 25 and the large diameter portion 26 of the shaft member 22 are formed, the connecting passage portion 42 is formed. The connecting passage portion 42 is formed by mechanical processing such as laser processing or cutting. The connecting passage portion 42 has one end as an opening 41 that is open on the outer circumferential surface 27. In the case of the first embodiment, the connecting passage portion 42 has an end, opposite to the opening 41, that is open on the axial end of the main body portion 25. After the opening 41 and the connecting passage portion 42 are formed, a groove portion 43, which connects to the opening 41, is formed. The groove portion 43 is formed through laser processing or mechanical processing, similarly to the connecting passage portion 42. The groove portion 43 is formed by cutting the large diameter portion 26 in the radial direction from the outer circumferential surface 27.

After the processing of the groove portion 43 is completed, the surface of the large diameter portion 26 is subject to finish. The surface is finished by, for example, polishing or cutting. The large diameter portion 26 is formed to be slightly larger than the intended outer diameter, and is polished to a predetermined dimension that has been preset. The groove portion 43 is formed taking into consideration the thickness of the large diameter portion 26 that will be removed by this polishing. The shaft member 22 is formed by the above procedure.

The following describes the operation of the planetary gear device 10 using the planetary gear unit 16 of the first embodiment with the above configuration.

When the planetary gear device 10 operates, each planetary gear member 21 rotates relatively to the shaft member 22 while being supported by the shaft member 22. In other words, the outer circumferential surface 27 of the shaft member 22 of the planetary gear unit 16 slides against the inner circumferential surface 24 of the sliding member 23 provided on the planetary gear member 21. The pump (not shown) pressurizes the lubricating oil and supplies it to the opening 41 through the connecting passage portion 42 provided inside the shaft member 22. The lubricating oil flows out of the opening 41 and is thereby supplied to the sliding portion between the planetary gear member 21 and the shaft member 22. In addition, some of the lubricating oil supplied flows in the axial direction from the opening 41 through the groove portion 43. The lubricating oil having flowed in the axial direction through the groove portion 43 flows out from the groove end 48 to the outside of the planetary gear unit 16. At this time, foreign matter that has entered between the planetary gear member 21 and the shaft member 22 moves to the groove portion 43 together with the lubricating oil due to the relative rotation of the planetary gear member 21 and the shaft member 22, and is contained in the groove portion 43. Since the lubricating oil flows in the axial direction in the groove portion 43, the foreign matter contained in the groove portion 43 is discharged from the groove end 48 together with the lubricating oil to the outside of the planetary gear unit 16. This rapidly discharges foreign matter that has entered between the planetary gear member 21 and the shaft member 22 or that has been generated between them, from the sliding region 30 to the outside of the planetary gear unit 16. As a result, the shaft member 22 is prevented from being damaged or worn by foreign matter.

The planetary gear unit 16 according to the first embodiment described above has a groove portion 43 in the shaft member 22. For this reason, foreign matter that enters the planetary gear unit 16 from various parts of the planetary gear device 10 in operation is discharged from the groove end 48 together with the lubricating oil flowing through the groove portion 43. In other words, even if foreign matter enters the sliding region 30 between the inner circumferential surface 24 and the outer circumferential surface 27, the foreign matter is promoted to be discharged from the groove end 48 together with the lubricating oil through the groove portion 43. This can prevent damage and wear to the inner circumferential surface 24 and the outer circumferential surface 27 caused by foreign matter, and to form a stable oil film.

In the first embodiment, the opening 41 and the groove portion 43 are provided in the sub load portion 31. The load applied to the shaft member 22 in operation of the planetary gear device 10 is smaller in the sub load portion 31 than in the main load portion 32. As a result, even if the opening 41 and the groove portion 43 are formed in the sub load portion 31, the formation of an oil film in the main load portion 32, where a stable oil film is required, is not hindered. Therefore, when the planetary gear unit 16 is configured, the supply of lubricating oil is ensured while the oil film is stably formed in the part where it is required between the inner circumferential surface 24 and the outer circumferential surface 27, that is, in the main load portion 32 where the load applied to the shaft member 22 is large. This makes it possible to form a stable oil film in the main load portion 32, which is subjected to a large load, reduce seizure and abnormal wear, and extend the lifespan of the planetary gear member 21 and the shaft member 22.

Furthermore, in the first embodiment, the planetary gear member 21 and the shaft member 22 are supported by a sliding bearing between them so that they can rotate relatively, the sliding bearing being formed by the sliding member 23 provided on the inner side the planetary gear member 21. As a result, compared to, for example, a rolling bearing, the structure and maintenance can be simplified, and the weight can be reduced. Therefore, for example, when the planetary gear device 10 is applied to a wind turbine generator (not shown), it is possible to reduce weight and improve durability while responding to the increase in size and load that accompanies increased output.

### (Second embodiment)

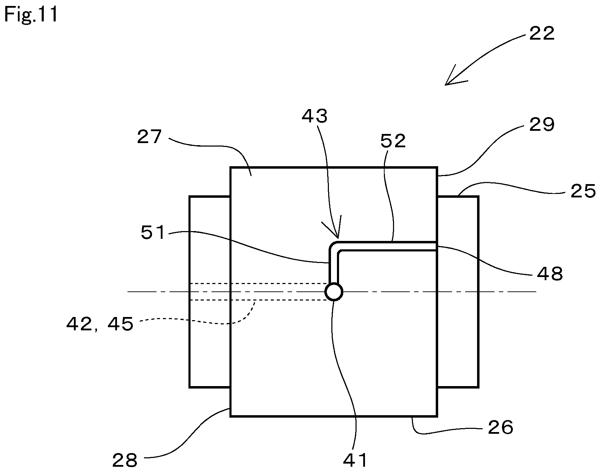

FIGS. 11 to 13 show a shaft member 22 according to a second embodiment.

The groove portion 43 of the shaft member 22 according to the second embodiment has a circumferential groove portion 51 and an axial groove portion 52. The circumferential groove portion 51 extends from the opening 41 in the circumferential direction of the shaft member 22. The axial groove portion 52 extends in the axial direction of the shaft member 22 from an end side of the circumferential groove portion 51, the end side being opposite to the opening 41. In this way, the groove portion 43 may be a combination of the circumferential groove portion 51 extending in the circumferential direction and the axial groove portion 52 extending in the axial direction. The axial groove portion 52 has a groove end 48 at the end opposite to the circumferential groove portion 51. The position where the axial groove portion 52 is connected to the circumferential groove portion 51 is not limited to the end of the circumferential groove portion 51. In other words, the axial groove portion 52 may be connected to the circumferential groove portion 51 at any position between the opening 41 and the end of the circumferential groove portion 51.

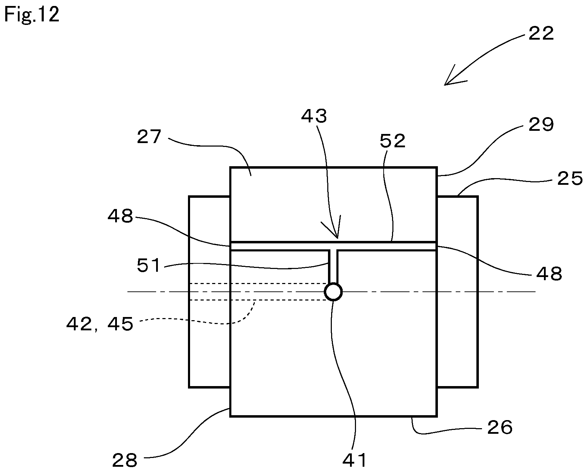

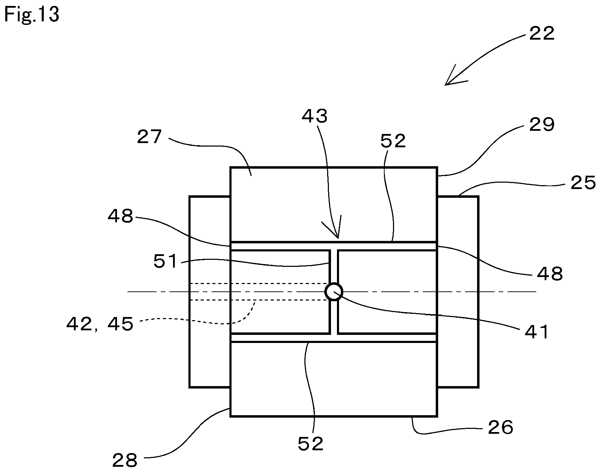

The axial groove portion 52 may be configured not only to have a groove end 48 on one side in the axial direction as shown in FIG. 11, but also to have groove ends 48 on the respective sides in the axial direction as shown in FIG. 12 and FIG. 13. Furthermore, the groove portion 43 may be configured to have a circumferential groove portion 51 on each side in the circumferential direction from the opening 41 as shown in FIG. 13, and have the ends of the circumferential groove portion 51 to each of which an axial groove portion 52 is connected.

In the second embodiment, the groove portion 43 has a circumferential groove portion 51 extending in the circumferential direction in the sub load portion 31. Thereby, the lubricating oil flowing out from the opening 41 is supplied to a wider range in the circumferential direction of the shaft member 22. At the same time, in the second embodiment, the total area of the groove portion 43 is increased, and foreign matter can be contained more reliably. Also in the second embodiment, the groove portion 43 is provided in the sub load portion 31. Therefore, the groove portion 43 does not hinder the formation of an oil film in the main load portion 32.

### (Third embodiment)

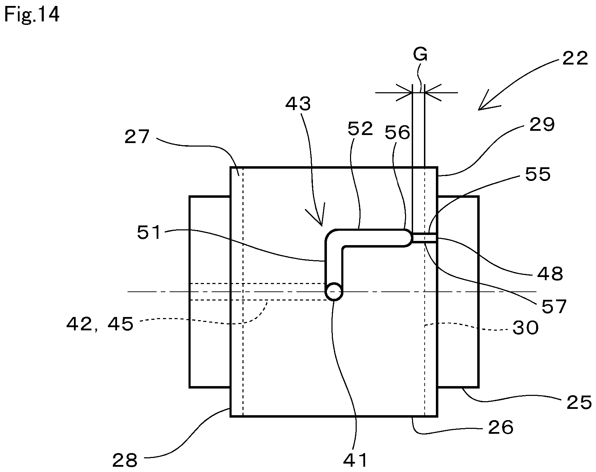

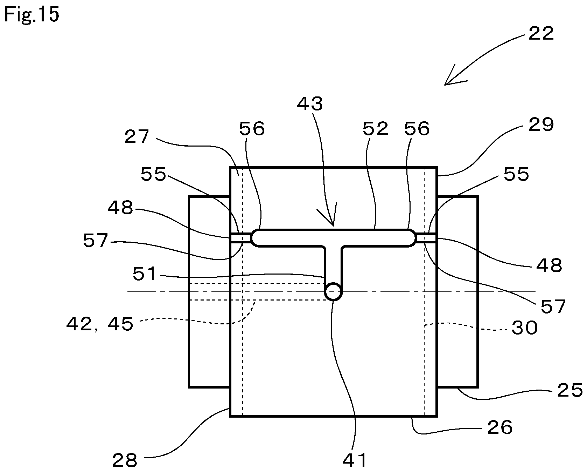

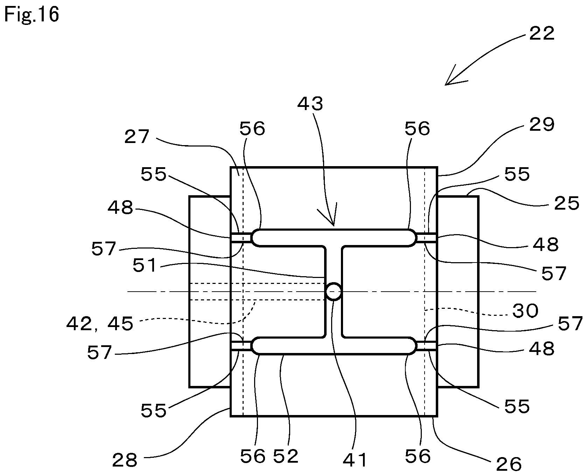

FIGS. 14 to 16 show each shaft member 22 according to a third embodiment.

The shaft member 22 according to the third embodiment has a throttle portion 55 between the opening 41 and the groove end 48. The throttle portion 55 has a smaller cross-sectional area than the other parts of the groove portion 43. Therefore, the throttle portion 55 throttles the flow of lubricating oil flowing through the groove portion 43, reducing the flow rate of the lubricating oil flowing through the groove portion 43. Since the cross-sectional area of the throttle portion 55 is smaller than the other parts of the groove portion 43, the flow rate of the lubricating oil flowing through the groove portion 43 depends on the cross-sectional area of the throttle portion 55. In other words, providing the throttle portion 55 reduces the flow rate of the lubricating oil regardless of the cross-sectional area of other parts of the groove portion 43. This makes it possible to reduce the capacity of the pump (not shown) that supplies the lubricating oil. The end of the throttle portion 55 opposite the groove end 48, that is, the end on the opening 41 side, is a start portion 56 where the cross-sectional area of the groove portion 43 starts reducing, as shown in FIG. 14.

The throttle portion 55 is provided over a range G extending from the position where the groove portion 43 intersects with the axial end of the sliding region 30 toward the opening 41. Here, when the position where the groove portion 43 intersects with the outer edge of the sliding region 30 in the axial direction is defined as an outer edge portion 57, the range G is a range equivalent to a length from the outer edge portion 57 toward the opening 41, the length being 3% of the outer diameter of the large diameter portion 26 of the shaft member 22, which forms the sliding region 30. In other words, the length of the range G from the outer edge portion 57 to the start portion 56 is equivalent to a length that is 3% of the outer diameter of the large diameter portion 26. The start portion 56 of the throttle portion 55 is set out of this range G, on the opening 41 side. Even if the flow rate of the lubricating oil is restricted by the throttle portion 55 that is set under such conditions, the lubricating oil is sufficiently supplied between the inner circumferential surface 24 and the outer circumferential surface 27. In addition, setting the range G of the throttle portion 55 as described above sufficiently ensures the discharge of foreign matter with the lubricating oil flowing through the groove portion 43.

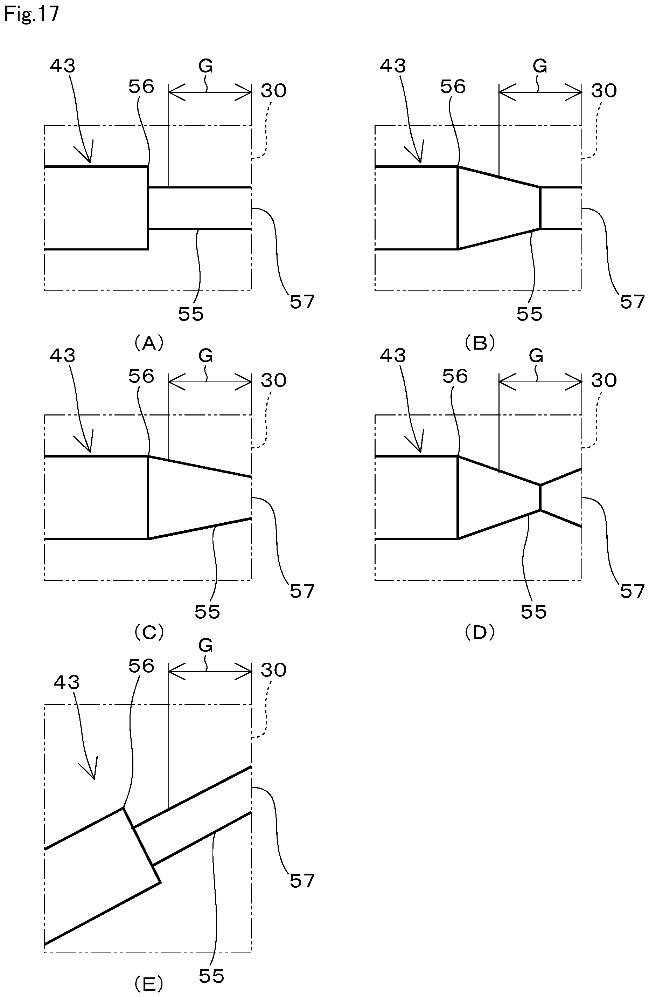

If the start portion 56 of the throttle portion 55 is closer to the opening 41 than the range G, the part where the cross-sectional area is minimal may be located anywhere. Specifically, the throttle portion 55 is configured as a part where the cross-sectional area becomes smaller at the end of the groove portion 43 as shown in FIG. 17(A). The throttle portion 55 may also be a tapered part where the cross-sectional area gradually reduces as shown in FIG. 17(B) and FIG. 17(C). The throttle portion 55 may be partially tapered as shown in FIG. 17(B), or entirely tapered as shown in FIG. 17(C). Furthermore, it is sufficient that the cross-sectional area of the throttle portion 55 is partially reduced. Therefore, the cross-sectional area of the throttle portion 55 may be larger on the groove end 48 side than that of the part where the cross-sectional area is minimal as shown in FIG. 17(D). In addition, even if the groove portion 43 is inclined with respect to the axis of the shaft member 22 as shown in FIG. 17(E), the start portion 56 of the throttle portion 55 just needs to be located closer to the opening 41 than the range G.

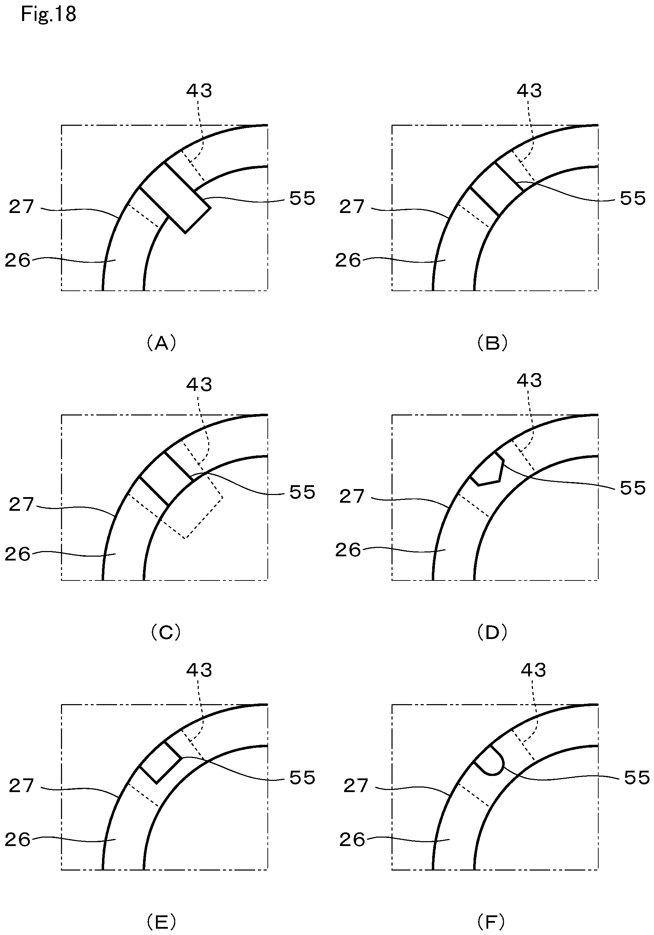

As described above, the throttle portion 55 just needs to include a part in the groove portion 43 whose cross-sectional area is smaller than the other parts. Therefore, the depth of the throttle portion 55, that is, the total radial length of the shaft member 22, is not important. In other words, if the throttle portion 55 is configured to have a cross-sectional area that is smaller than the other parts of the groove portion 43, the depth and cross-sectional shape can be set freely, as shown in FIG. 18(A) to FIG. 18(F). In addition, the throttle portion 55 can be provided between the opening 41 and the groove end 48 even if the groove portion 43 does not reach the outer wall 29 as shown in the example of FIG. 10.

In the third embodiment, the groove portion 43 has a throttle portion 55. This reduces the amount of consumed lubricating oil. This then makes it possible to reduce the performance required of a pump (not shown) that supplies lubricating oil while maintaining the ability to discharge foreign matter. In addition, in the third embodiment, the position of the throttle portion 55 can be set to make it possible to limit the flow rate of the lubricating oil while sufficiently lubricating the sliding portion with the lubricating oil, and to discharge foreign matter with the lubricating oil flowing through the groove portion 43.

### (Fourth embodiment)

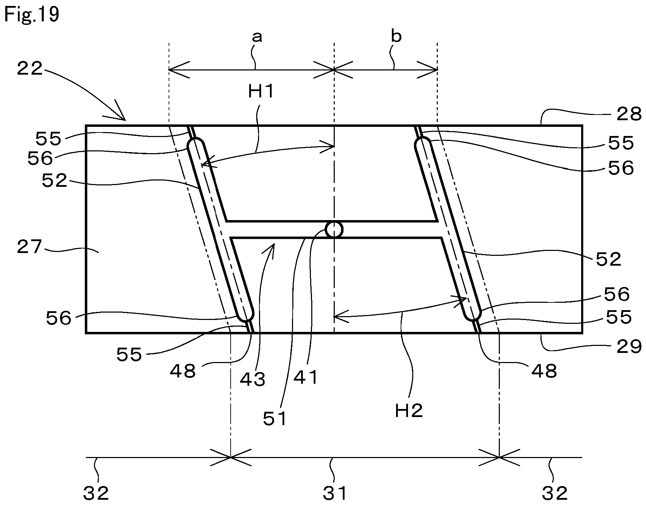

FIGS. 19 to 25 show shaft members according to a fourth embodiment. FIGS. 19 to 25 correspond to developments of the outer circumferential surface 27 shown in FIG. 5.

The shaft members 22 according to the fourth embodiment each have the groove portion 43 at least a part of which is inclined with respect to the axis of the shaft member 22. In the example shown in FIG. 19, the two axial groove portions 52 are inclined with respect to the axis of the shaft member 22. The two axial groove portions 52 are generally parallel. The inclination angles H1 and H2 of the axial groove portions 52 are preferably about 0° to 55°. In the example shown in FIG. 19, the sum of the circumferential angle region a and the angle region b is 300° or less, which is generally within the sub load portion 31, that is, a + b ≤ 300°.

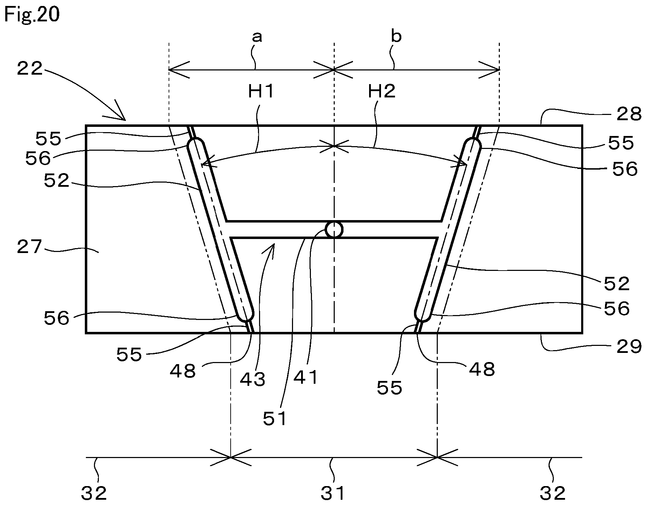

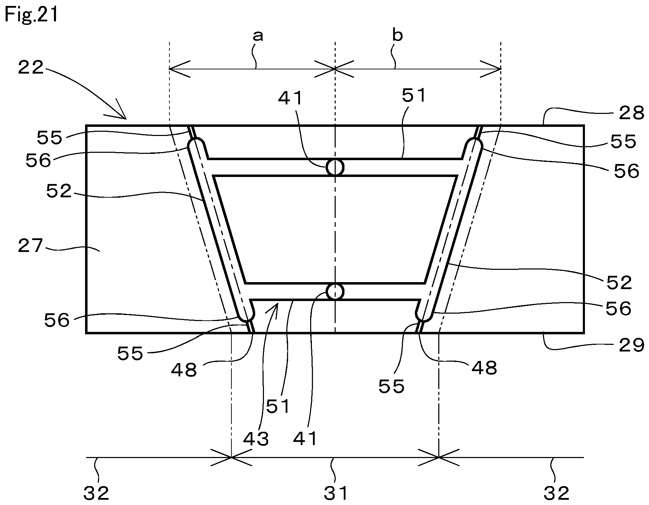

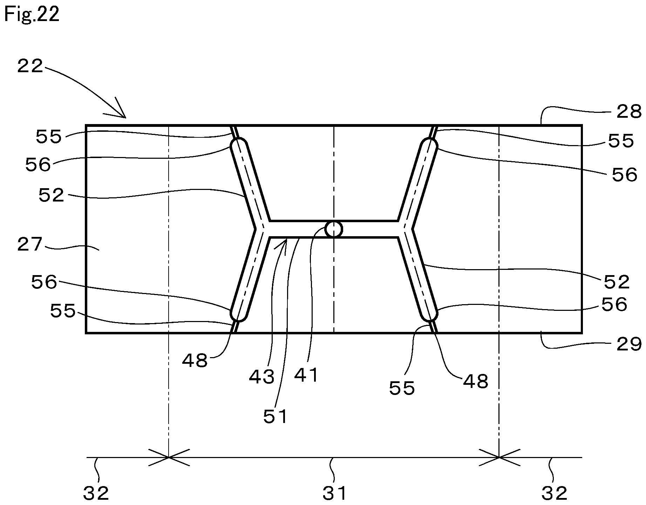

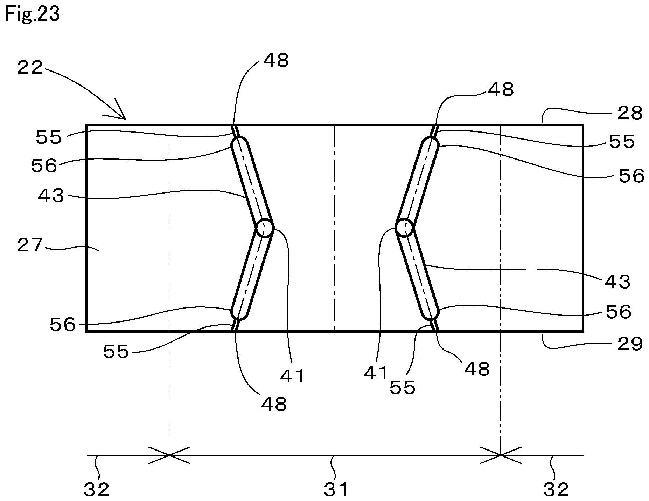

In the example shown in FIG. 20, the two axial groove portions 52 are inclined at different angles with respect to the axis. In the example shown in FIG. 20, the two axial groove portions 52 are inclined generally symmetrically with respect to the axis passing through the opening 41 in the development. In the example shown in FIG. 21, two openings 41 are provided. In the example shown in FIG. 21, two circumferential groove portions 51 are connected to the two respective openings 41, and each circumferential groove portion 51 has two ends connected to the two respective axial groove portions 52. In the examples shown in FIGS. 22 and 23, the axial groove portions 52 are inclined while bending in the axial direction. The groove portion 43 can be configured to be connected to the opening 41 through one circumferential groove portion 51, as shown in FIG. 22. Also, as shown in FIG. 23, the groove portions 43 can be configured to have no circumferential groove portions 51 and each to extend to both ends in the axial direction as an inclined groove portion 43.

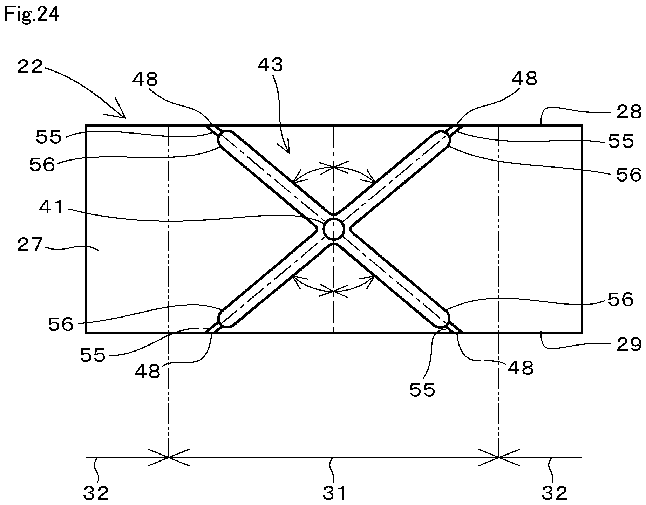

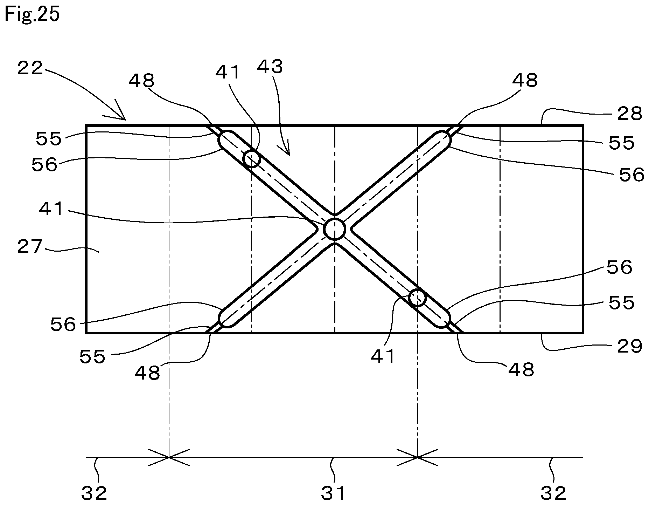

The groove portion 43 may be shaped as shown in FIGS. 24 and 25. In this case, each shaft member 22 has four groove portions 43 inclined in the axial direction. All four groove portion 43 can be configured to connect to the opening 41 as shown in FIG. 24. Furthermore, each of the four groove portions 43 may be configured to connect to two or more openings 41 as shown in FIG. 25.

In the fourth embodiment, at least part of the groove portion 43 is inclined with respect to the axis of the shaft member 22. Specifically, at least one of the circumferential groove portions 51 and the axial groove portions 52 of the groove portion 43 is inclined with respect to the axis of the shaft member 22. Both the circumferential groove portions 51 and the axial groove portions 52 may be inclined with respect to the axis of the shaft member 22. As a result, the groove portion 43 is provided over a wide region in the part where the inner circumferential surface 24 and the outer circumferential surface 27 slide against each other. As a result, the sliding portion can be lubricated more sufficiently by the lubricating oil. This makes it possible to form an oil film more stably and discharge foreign matter.

### (Other embodiments)

The present invention described above is not limited to the above-mentioned embodiments, and can be applied to various embodiments without departing from the gist of the invention.

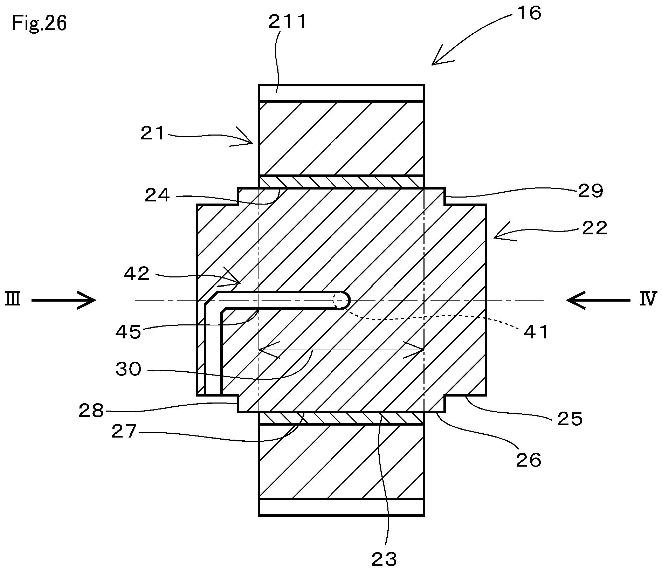

In the above-mentioned embodiments, the example has been described in which the end of the connecting passage portion 42 opposite the opening 41 is connected to the axial end of the shaft member 22. However, the end of the connecting passage portion 42 opposite the opening 41 is not limited to the axial end of each shaft member 22, and may be configured to be connected to an outer wall midway in the axial direction of the shaft member 22, for example, as shown in FIG. 26.

## Claims

1. A planetary gear unit (16) comprising:
a planetary gear member (21);
a sliding member (23) that has a cylindrical inner circumferential surface (24) and is provided on an inner circumferential side of the planetary gear member (21); and
a shaft member (22) having an outer circumferential surface (27), the outer circumferential surface (27) having a total axial length longer than the inner circumferential surface (24), the outer circumferential surface (27) having a part in an axial direction, the part being opposed to the inner circumferential surface (24), wherein
the shaft member (22) includes
a sliding region (30) formed with a main load portion (33) and a sub load portion (34) in a circumferential direction on the outer circumferential surface (27), the main load portion (33) receiving a large load from the planetary gear member (21) when the sliding region (30) slides against the sliding member (23) provided on the planetary gear member (21), the sub load portion (34) receiving a smaller load than the main load portion (33) when the sliding region (30) slides against the sliding member (23),
an opening (41) is open on the sub load portion (34),
a connecting passage portion (42) is provided inside the shaft member (22) and has one end connected to the opening (41),
a groove portion (43) is provided so as to be recessed radially inward from the outer circumferential surface (27), and
the groove portion (43) extends from the opening (41) toward at least one end in an axial direction of the shaft member (22), and has a groove end (48) on an opposite side of the opening (41), the groove end (48) being located axially outward relative to the opposing inner circumferential surface (24).

2. The planetary gear unit according to claim 1, wherein the groove portion (43) extends from the opening (41) toward both ends of the shaft member (22) in an axial direction.

3. The planetary gear unit according to claim 1, wherein the groove portion (43) is provided in the sub load portion (34).

4. The planetary gear unit according to claim 1, wherein the groove portion (43) and the connecting passage portion (42) have different cross-sectional areas.

5. The planetary gear unit according to claim 1, wherein the groove portion (43) has a circumferential groove portion (51) extending from the opening (41) in a circumferential direction of the shaft member (22), and an axial groove portion (52) extending from the circumferential groove portion (51) in an axial direction of the shaft member (22).

6. The planetary gear unit according to claim 5, wherein at least one of the circumferential groove portion (51) and the axial groove portion (52) is inclined with respect to an axial direction of the shaft member (22).

7. The planetary gear unit according to any one of claims 1 to 6, wherein the groove portion (43) has a throttle portion (55) between the opening (41) and the groove end (48), the throttle portion (55) having a smaller cross-sectional area than other parts.

8. The planetary gear unit according to claim 7, wherein the throttle portion (55) is provided over a range G that starts at the groove end (48) and extends from the groove end (48) toward the opening (41) by 3% of an outer diameter of the shaft member (22) forming the sliding region (30).

9. The planetary gear unit according to claim 7, wherein the throttle portion (55) has a cross-sectional area that changes in an axial direction of the shaft member (22).

10. A planetary gear device comprising:
a first shaft member (11);
a sun gear (13) provided on the first shaft member (11);
one or more of the planetary gear units (16) according to claim 1, the planetary gear units (16) each meshing with the sun gear (13) on an inner circumferential side, the planetary gear units (16) each meshing with an internal gear (14) on an outer circumferential side; and
a carrier (15) to which the shaft members (22) of the planetary gear units (16) are fixed, the carrier (15) being connected to a second shaft member (12) that is different from the first shaft member (11).
